# FASCICULE DE BREVET EUROPEEN

(11) **EP 4 575 806 B1**
(45) Date de publication et mention de la délivrance du brevet: **13.05.2026**
(21) Numéro de dépôt: 24220520.1
(22) Date de dépôt: 17.12.2024
(51) Int. Cl.: G06F 12/04

(54) **SYSTÈME INFORMATIQUE ET PROCÉDÉ POUR EFFECTUER UN ACCÈS ALÉATOIRE D'UN BIT DANS UNE MÉMOIRE**
COMPUTERSYSTEM UND VERFAHREN ZUM DURCHFÜHREN DES ZUFÄLLIGEN ZUGRIFFS AUF EIN BIT IN EINEM SPEICHER
COMPUTER SYSTEM AND PROCESS FOR PERFORMING RANDOM ACCESS OF A BIT IN A MEMORY

(30) Priorité: 19.12.2023 FR 2314482
(43) Date de publication de la demande: 25.06.2025
(73) Titulaire: STMicroelectronics International N.V., 1228 Plan-les-Ouates, Geneva (CH)
(72) Inventeur: XUE, Min, 38170 SEYSSINET PARISET (FR)
(74) Mandataire: Casalonga

(56) Documents cités:
- US-A1- 2011 280 314
- US-A1- 2012 155 551
- US-A1- 2013 326 201
- US-A1- 2017 185 402

## Description

Des modes de réalisation et de mise en œuvre concernent la lecture et l'écriture aléatoire d'un bit dans une mémoire de données d'un système informatique.

Un système informatique peut comprendre une mémoire de données configurée pour stocker un tableau d'octets et une unité centrale de traitement configurée pour accéder en lecture et/ou en écriture à cette mémoire de données afin de lire ou écrire des mots dans ledit tableau d'octets.

L'unité centrale de traitement est généralement configurée pour accéder en lecture et/ou en écriture à la mémoire de données afin de lire des mots sur 8 bits, 16 bits ou 32 bits.

Il existe certaines applications requérant une lecture et/ou une écriture aléatoire d'un bit dans un tableau d'octets stocké dans une mémoire de données d'un système informatique. On parle de lecture et/ou d'écriture aléatoire lorsque la lecture et/ou l'écriture sont réalisés à des moments non prévisibles. Les accès en lecture et/ou en écriture peuvent notamment être réalisés pour lire et/ou écrire chaque bit du tableau d'octets. Par exemple, une application connue requérant la lecture ou l'écriture aléatoire d'un bit dans une mémoire de données est le codage et le décodage d'un signal audio.

Dans ces applications, les accès mémoire sur 8 bits, 16 bits ou 32 bits ne permettent pas de lire ou écrire directement un bit dans la mémoire de données.

Afin d'accéder à un seul bit dans le tableau d'octets de la mémoire de données, il est courant d'accéder à l'octet dudit tableau d'octets comportant le bit à accéder puis d'utiliser un masque associé à la position du bit à accéder dans ledit octet afin de sélectionner le bit dans ledit octet. Cet accès au bit est réalisé par voie logicielle par l'unité centrale de traitement.

Une telle méthode requiert d'effectuer plusieurs tests et mises à jour pour accéder à un seul bit. En particulier, le masque doit être mis à jour pour chaque bit à accéder. Ces tests et mises à jour exécutés par voie logicielle peuvent nécessiter plusieurs cycles de l'unité centrale de traitement. Ainsi, un tel accès audit bit est relativement long à réaliser. En outre, un tel accès audit bit consomme une quantité d'énergie relativement importante du fait des nombreux cycles de l'unité centrale de traitement requis. Or, pour certaines applications notamment pour le Bluetooth à basse énergie (désigné également par l'acronyme « BLE » de l'anglais « Bluetooth Low Energy »), il est important de minimiser la consommation d'énergie et le nombre de calculs pour réaliser une tâche donnée.

US 2013/326201 A1 divulgue un appareil et une méthode pour traiter des flux de bits au moyen d'instructions "orientées bits" dédiées dans un processeur.

Il existe donc un besoin de proposer une solution permettant d'accéder plus simplement et plus rapidement à un bit dans un tableau d'octets.

Selon un aspect, il est proposé un système informatique comprenant :
- une mémoire de données configurée pour stocker un tableau d'octets, et une mémoire de programme configurée pour stocker un programme d'ordinateur,
- un processeur de traitement du signal numérique configuré pour exécuter un programme d'ordinateur comprenant des instructions permettant d'accéder à un bit dans ledit tableau d'octets, ledit processeur de traitement du signal numérique étant configuré pour accéder à chaque octet dudit tableau d'octets,
- un circuit dédié -notamment intégré dans le processeur de traitement du signal numérique- configuré pour accéder en lecture et/ou en écriture à un bit d'un octet dudit tableau d'octets en utilisant :
   - un pointeur de position de bit pointant vers le bit à accéder dans le tableau d'octets, et
   - ledit octet comprenant le bit à accéder.

Un tel système informatique utilise simplement un pointeur de position de bit, et non pas un pointeur de position d'octet pris en combinaison avec un masque.

Un tel système informatique est configuré pour accéder à un bit dans la mémoire aléatoirement en utilisant un circuit dédié pour réaliser certaines instructions. Ce circuit dédié occupe peu d'espace dans le système informatique et améliore nettement le délai pour accéder à un bit en mémoire.

Un tel système informatique est configuré pour accéder simplement et rapidement à un bit dans la mémoire aléatoirement. En effet, un tel circuit dédié requiert peu de cycles d'exécution du processeur de traitement du signal numérique pour accéder à un bit dans la mémoire aléatoirement.

Un tel circuit dédié permet également de diminuer la consommation d'énergie pour accéder à un bit dans la mémoire aléatoirement, car un tel accès est réalisé en effectuant peu d'opérations et en peu de cycles.

Dans un mode de réalisation avantageux, le circuit dédié comprend un premier bloc configuré pour calculer une valeur de décalage d'octet selon la valeur du pointeur de position de bit.

Avantageusement, le premier bloc du circuit dédié comprend :
- une porte logique de type « ET » configurée pour effectuer une opération logique de type « ET » entre la valeur du pointeur de position de bit et la valeur hexadécimale 0x7 pour obtenir une valeur d'indexation,
- un circuit de comparaison configuré pour calculer la valeur de décalage d'octet en comparant la valeur d'indexation à 0, la valeur de décalage d'octet étant égale à -1 lorsque la valeur d'indexation est égale à 0 et égale à 0 sinon.

Dans un mode de réalisation avantageux, le circuit dédié comprend un deuxième bloc configuré pour déterminer la valeur d'un bit à lire à partir du pointeur de position de bit et d'un octet comprenant ledit bit à lire.

Avantageusement, le deuxième bloc du circuit dédié comprend :
- un circuit additionneur configuré pour augmenter la valeur du pointeur de position de bit de 1,
- une première porte logique de type « ET » configurée pour effectuer une opération logique de type « ET » entre la valeur augmentée du pointeur de position de bit et une valeur hexadécimale égale à 0x7,
- un circuit soustracteur configuré pour calculer une valeur de décalage en soustrayant une valeur égale à 7 de la valeur en sortie de la première porte logique de type « ET »,
- un circuit de décalage configuré pour décaler vers la droite la valeur de l'octet comprenant ledit bit à accéder d'un nombre de bits correspondant à ladite valeur de décalage,
- une deuxième porte logique de type « ET » configurée pour effectuer une opération logique de type « ET » entre une valeur égale à 1 et la valeur de l'octet décalée de manière à obtenir la valeur du bit à lire.

Le circuit dédié utilise deux blocs pour la lecture d'un bit dans le tableau d'octets. En particulier, l'ensemble des tests pour la lecture d'un bit est réalisé par le circuit dédié, et non pas par une unité centrale de traitement du système informatique. De la sorte, l'accès en lecture aléatoire d'un bit dans le tableau d'octets de la mémoire de données est réalisé plus rapidement.

Dans un mode de réalisation avantageux, le programme d'ordinateur comprend des instructions qui lorsqu'elles sont mises en œuvre par le processeur de traitement du signal numérique conduisent celui-ci à effectuer au moins un appel d'une fonction pour lire un bit dans le tableau d'octets, chaque appel de cette fonction prenant en entrée le pointeur de position de bit et un pointeur d'octet comme attributs et entraînant :
- un calcul d'une valeur de décalage d'octet par ledit premier bloc, puis
- une mise à jour du pointeur d'octet par ladite valeur de décalage d'octet, puis
- une détermination de la valeur du bit à lire par ledit deuxième bloc du circuit dédié.

Pour programmer une telle lecture d'un bit dans le tableau d'octets de ladite mémoire de données, il est possible d'utiliser des fonctions intrinsèques qui permettent d'utiliser ledit circuit dédié. Une fonction intrinsèque est intégrée dans un compilateur. Cela permet de simplifier la programmation d'un tel accès aléatoire à un bit dans la mémoire de données.

Avantageusement, le circuit dédié comprend un troisième bloc configuré pour écrire la valeur d'un bit à la place d'un bit pointé par le pointeur de position de bit dans un octet sur lequel écrire.

Dans un mode de réalisation avantageux, le troisième bloc du circuit dédié comprend :
- un circuit additionneur configuré pour augmenter la valeur du pointeur de position de bit de 1,
- une première porte logique de type « ET » configuré pour effectuer une opération logique de type « ET » entre la valeur augmentée du pointeur de position de bit et une valeur hexadécimale égale à 0x7,
- un circuit soustracteur configuré pour calculer une valeur de décalage en soustrayant une valeur égale à 7 de la valeur en sortie de la première porte logique de type « ET »,
- un circuit de décalage configuré pour décaler vers la gauche la valeur 1 d'un nombre de bits correspondant à ladite valeur de décalage pour créer un masque,
- une porte logique inverseuse configuré pour créer un masque complémentaire à partir dudit masque obtenu en sortie du circuit de décalage,
- un deuxième circuit logique de type « ET » configuré pour appliquer le masque complémentaire sur l'octet sur lequel écrire pour obtenir un premier octet B0,
- un circuit logique de type « OU » configuré pour appliquer le masque sur l'octet sur lequel écrire pour obtenir un deuxième octet.
- un circuit de sélection configuré pour générer un octet correspondant au premier octet si la valeur du bit à écrire est égale à 1 ou correspondant au deuxième octet sinon.

De préférence, le programme d'ordinateur comprend des instructions qui lorsqu'elles sont mises en œuvre par le processeur de traitement du signal numérique conduisent celui-ci à effectuer au moins un appel d'une fonction pour écrire un bit dans le tableau d'octets, chaque appel de cette fonction prenant en entrée le pointeur de position de bit et un pointeur d'octet comme attributs et entraînant :
- un calcul d'une valeur de décalage d'octet par ledit premier bloc, puis
- une mise à jour du pointeur d'octet par ladite valeur de décalage d'octet, puis
- une écriture du bit à écrire par ledit troisième bloc du circuit dédié.

Pour programmer une telle écriture d'un bit dans le tableau d'octets de ladite mémoire de données, il est également possible d'utiliser des fonctions intrinsèques qui permettent d'utiliser ledit circuit dédié.

De préférence, le programme d'ordinateur comprend des instructions qui lorsqu'elles sont mises en œuvre par le processeur de traitement du signal numérique conduisent celui-ci à initialiser le pointeur de position de bit pour qu'il pointe vers la position du dernier bit du tableau d'octets, et à décrémenter ledit pointeur de position de bit à chaque accès en lecture et/ou en écriture.

Selon un autre aspect, il est proposé un procédé, mis en œuvre par un système informatique, d'accès en lecture et/ou en écriture à un bit d'un octet stocké dans un tableau d'octets dans une mémoire de données dudit système informatique, le procédé comprenant une mise en œuvre d'instructions du programme d'ordinateur par un processeur de traitement du signal numérique du système informatique entraînant:
- un accès audit octet stocké dans la mémoire de données par le processeur de traitement du signal numérique,
- une mise en œuvre d'un circuit dédié du système informatique - notamment intégré dans le processeur de traitement du signal numérique- pour accéder en lecture et/ou en écriture audit bit de l'octet accédé par le processeur de traitement du signal numérique en utilisant :
   - un pointeur de position de bit pointant vers le bit à accéder dans le tableau d'octets, et
   - ledit octet comprenant le bit à accéder.

Dans un mode de mise en œuvre avantageux, le procédé comprend une mise en œuvre d'un premier bloc du circuit dédié pour calculer une valeur de décalage d'octet selon la valeur du pointeur de position de bit.

Avantageusement, la mise en œuvre du premier bloc du circuit dédié entraîne :
- une mise en œuvre d'une porte logique de type « ET » du premier bloc pour effectuer une opération logique de type « ET » entre la valeur du pointeur de position de bit et la valeur hexadécimale 0x7 pour obtenir une valeur d'indexation,
- une mise en œuvre d'un circuit de comparaison du premier bloc pour calculer la valeur de décalage d'octet en comparant la valeur d'indexation à 0, la valeur de décalage d'octet étant égale à -1 lorsque la valeur d'indexation est égale à 0 et égale à 0 sinon.

Dans un mode de mise en œuvre avantageux, le procédé comprend en outre une mise en œuvre d'un deuxième bloc du circuit dédié pour déterminer la valeur d'un bit à lire à partir du pointeur de position de bit et d'un octet comprenant ledit bit à lire.

Avantageusement, la mise en œuvre du deuxième bloc du circuit dédié entraîne :
- une mise en œuvre d'un circuit additionneur du deuxième bloc pour augmenter la valeur du pointeur de position de bit de 1,
- une mise en œuvre d'une première porte logique de type « ET » du deuxième bloc pour effectuer une opération logique de type « ET » entre la valeur augmentée du pointeur de position de bit et une valeur hexadécimale égale à 0x7,
- une mise en œuvre d'un circuit soustracteur du deuxième bloc pour calculer une valeur de décalage en soustrayant une valeur égale à 7 de la valeur en sortie de la première porte logique de type « ET »,
- une mise en œuvre d'un circuit de décalage du deuxième bloc pour décaler vers la droite la valeur de l'octet comprenant ledit bit à accéder d'un nombre de bits correspondant à ladite valeur de décalage,
- une mise en œuvre d'une deuxième porte logique de type « ET » du deuxième bloc pour effectuer une opération logique de type « ET » entre une valeur égale à 1 et la valeur de l'octet décalée de manière à obtenir la valeur du bit à lire.

Dans un mode de mise en œuvre avantageux, le procédé comprend une mise en œuvre d'instructions du programme d'ordinateur par le processeur de traitement du signal numérique entraînant au moins un appel d'une fonction pour lire un bit dans le tableau d'octets, chaque appel de cette fonction prenant en entrée le pointeur de position de bit et un pointeur d'octet comme attributs et entraînant :
- un calcul d'une valeur de décalage d'octet par ledit premier bloc, puis
- une mise à jour du pointeur d'octet par ladite valeur de décalage d'octet, puis
- une détermination de la valeur du bit à lire par ledit deuxième bloc du circuit dédié.

Avantageusement, le procédé comprenant en outre une mise en œuvre d'un troisième bloc du circuit dédié pour écrire la valeur d'un bit à la place d'un bit pointé par le pointeur de position de bit dans un octet sur lequel écrire.

Dans un mode de mise en œuvre avantageux, la mise en œuvre du troisième bloc du circuit dédié entraîne :
- une mise en œuvre d'un circuit additionneur du troisième bloc pour augmenter la valeur du pointeur de position de bit de 1,
- une mise en œuvre d'une première porte logique de type « ET » du troisième bloc pour effectuer une opération logique de type « ET » entre la valeur augmentée du pointeur de position de bit et une valeur hexadécimale égale à 0x7,
- une mise en œuvre d'un circuit soustracteur du troisième bloc pour calculer une valeur de décalage en soustrayant une valeur égale à 7 de la valeur en sortie de la première porte logique de type « ET »,
- une mise en œuvre d'un circuit de décalage du troisième bloc pour décaler vers la gauche la valeur 1 d'un nombre de bits correspondant à ladite valeur de décalage pour créer un masque,
- une mise en œuvre d'une porte logique inverseuse du troisième bloc pour créer un masque complémentaire à partir dudit masque obtenu par la mise en œuvre du circuit de décalage,
- une mise en œuvre d'un deuxième circuit logique de type « ET » du troisième bloc pour appliquer le masque complémentaire sur l'octet sur lequel écrire pour obtenir un premier octet,
- une mise en œuvre d'un circuit logique de type « OU » du troisième bloc pour appliquer le masque sur l'octet sur lequel écrire pour obtenir un deuxième octet.
- une mise en œuvre d'un circuit de sélection pour générer un octet BTE_OUT correspondant au premier octet si la valeur du bit à écrire est égale à 0 ou correspondant au deuxième octet sinon.

De préférence, comprenant une mise en œuvre d'instructions du programme d'ordinateur par le processeur de traitement du signal numérique entraînant au moins un appel d'une fonction pour écrire un bit dans le tableau d'octets, chaque appel de cette fonction prenant en entrée le pointeur de position de bit et un pointeur d'octet comme attributs et entraînant :
- un calcul d'une valeur de décalage d'octet par ledit premier bloc, puis
- une mise à jour du pointeur d'octet par ladite valeur de décalage d'octet, puis

- une écriture du bit à écrire par ledit troisième bloc du circuit dédié.

Avantageusement, le procédé comprend une mise en œuvre d'instructions du programme d'ordinateur par le processeur de traitement du signal numérique entraînant une initialisation du pointeur de position de bit pour qu'il pointe vers la position du dernier bit du tableau d'octets, et une décrémentation dudit pointeur de position de bit à chaque accès en lecture et/ou en écriture.

D'autres avantages et caractéristiques de l'invention apparaîtront à l'examen de la description détaillée de modes de réalisation, nullement limitatifs, et des dessins annexés sur lesquels :
[Fig 1]
[Fig 2]
[Fig 3]
[Fig 4]
[Fig 5]

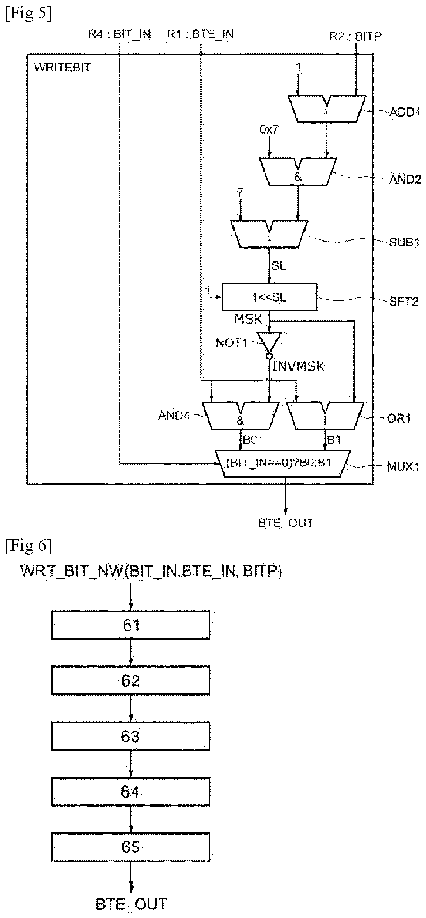

[Fig 6] illustrent des modes de réalisation et de mise en œuvre de l'invention.

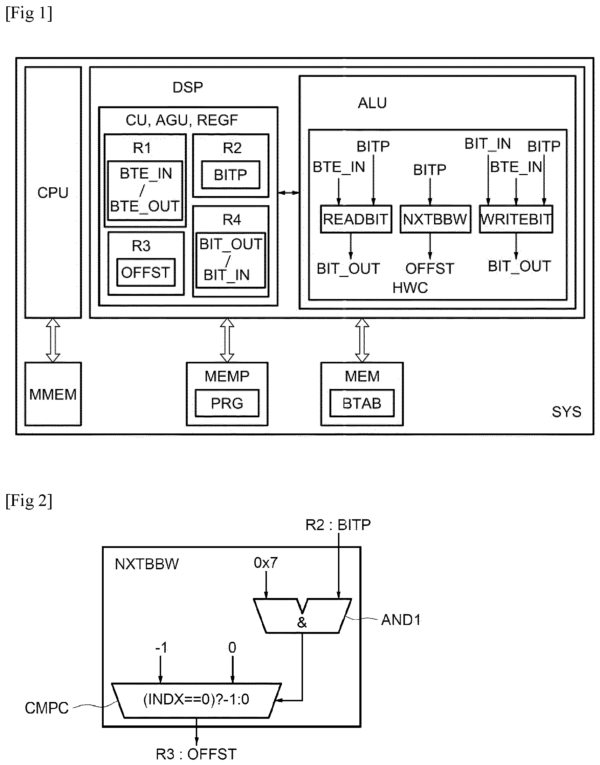

La figure 1 illustre un mode de réalisation d'un système informatique SYS. Le système informatique SYS comprend une unité centrale de traitement CPU et une mémoire centrale MMEM. Le système informatique comprend également un processeur de traitement du signal numérique DSP (désigné également par l'expression anglaise « Digital signal processor ») avec une mémoire MEM de données, une mémoire MEMP de programme et un circuit HWC dédié aux accès en lecture et/ou en écriture à un bit dans un octet. Ce dernier est intégré dans une unité arithmétique et logique ALU (désignée également par l'expression anglaise « Arithmetic and Logic Unit ») du processeur de traitement du signal numérique DSP. Le processeur de traitement du signal numérique DSP contient aussi une unité de control CU (désignée également par l'expression anglaise « Control Unit »), une unité de génération d'adresse AGU (désignée également par l'expression anglaise « Address Generation Unit ») et un banc de registres (désigné également par l'expression anglaise « Register file »). Le système informatique SYS peut être un système sur puce.

La mémoire MEM de données est configurée pour stocker un tableau d'octets BTAB. La mémoire MEM peut être accédée en lecture ou en écriture par le processeur de traitement du signal numérique DSP. Chaque accès à la mémoire par le processeur de traitement du signal numérique DSP est réalisé pour des mots ayant une taille minimale d'un octet. Ainsi, le processeur de traitement du signal numérique DSP peut accéder à chaque octet du tableau d'octets BTAB de la mémoire MEM. Le processeur de traitement du signal numérique DSP peut placer les octets chargés dans ses registres qui servent de tampons entre la mémoire de données MEM et l'ALU du processeur de traitement du signal numérique DSP. Néanmoins, le processeur de traitement du signal numérique DSP ne peut pas lire ou écrire directement un bit dans ledit tableau d'octets.

Les données du tableau d'octets BTAB peuvent correspondre à des données compressées d'un flux de données audio. En particulier, le flux de données audio comprend une succession d'échantillons audio. Ces échantillons peuvent être compressés afin de réduire leur taille. Par exemple, les échantillons peuvent être indépendamment compressés sur un bit, deux bits, trois bits ou quatre bits. Chaque bit du flux de données audio peut avoir sa propre signification. La valeur de chaque bit du flux de données peut influencer l'action à prendre dans le processus de décompression par exemple. C'est pourquoi il est important de pouvoir accéder à un bit du flux de données audio compressées. Il est donc important de pouvoir accéder à chaque bit du tableau d'octets stocké en mémoire.

Le processeur de traitement du signal numérique DSP est configuré pour exécuter un programme d'ordinateur PRG comprenant des instructions qui lorsqu'elles sont mises en œuvre dans le processeur de traitement du signal numérique DSP conduisent celle-ci à réaliser un accès en lecture et/ou en écriture à un bit d'un octet du tableau d'octets stocké en mémoire. Ce programme d'ordinateur PRG peut être stocké dans la mémoire MEMP de programme du système informatique SYS.

Le processeur de traitement du signal numérique DSP peut allouer un premier registre R1 pour stocker un octet BTE_IN lu dans le tableau d'octets BTAB stocké dans la mémoire MEM. Le processeur de traitement du signal numérique DSP peut également allouer un deuxième registre R2 pour stocker un pointeur BITP de position du bit à accéder dans le tableau d'octets BTAB. Le processeur de traitement du signal numérique DSP peut également allouer un troisième registre R3 pour stocker une valeur OFFST de décalage d'octet. Le processeur de traitement du signal numérique DSP peut également allouer un quatrième registre R4 pour stocker une valeur du bit à accéder BIT_OUT. Pour écrire un bit, le processeur de traitement du signal numérique DSP utilise le registre R4 pour stocker le bit BIT_IN à écrire dans l'octet BTE_IN contenu dans le registre R1. Il réutilise le registre R1 pour stocker l'octet résultant BTE_OUT avec ledit bit écrit à la sortie.

Le circuit HWC peut notamment être obtenu à partir d'un code « RTL » (de l'anglais « Register Transfer Level »)

Le circuit HWC dédié comprend un premier bloc NXTBBW configuré pour déterminer la valeur suivante du décalage d'octet OFFST. Un tel premier bloc NXTBBW est illustré à la figure 2.

En particulier, le premier bloc NXTBBW est configuré pour recevoir en entrée la valeur du pointeur de position de bit BITP stockée dans le deuxième registre R2.

Ce premier bloc NXTBBW comprend une porte logique AND1 de type « ET ». La porte logique AND1 est configurée pour recevoir en entrée la valeur du pointeur de position de bit BITP ainsi qu'un masque de valeur '0x7' (en hexadécimal). La porte logique de type « ET » est configurée pour appliquer le masque de valeur '0x7' sur la valeur du pointeur de position de bit BITP. La porte logique de type « ET » permet ainsi de savoir à partir des trois bits de poids faible du pointeur de position de bit BITP s'il faut pré-ajuster ou non le pointeur d'octets via le décalage d'octet OFFST.

La porte logique AND1 est configurée pour générer en sortie une valeur d'indexation INDX. En particulier, la valeur d'indexation INDX sur un octet est comprise entre 0 et 7. Ainsi, il suffit de regarder les trois bits de poids faibles du pointeur de position de bit pour connaître la valeur d'indexation INDX.

Le premier bloc NXTBBW comprend également un circuit de comparaison CMPC prenant en entrée la valeur d'indexation INDX. Le circuit de comparaison CMPC permet de vérifier si la valeur d'indexation est à 0. Si la valeur d'indexation est à 0, cela signifie qu'il ne reste qu'un seul bit de l'octet à lire car les autres ont déjà été lus auparavant. Dans ce cas, il convient de modifier la valeur de décalage d'octet pour traiter l'octet suivant dans le tableau d'octets après avoir lu le dernier bit de l'octet actuel.

En particulier, le circuit de comparaison CMPC prend également en entrée deux paramètres de valeur '-1' et '0'.

Ainsi, le circuit de comparaison CMPC est configuré pour comparer la valeur d'indexation INDX à la valeur '0' et pour générer la valeur suivante du décalage d'octet en fonction du résultat de cette comparaison. En particulier, le circuit de comparaison CMPC est configuré pour générer une valeur suivante du décalage d'octet OFFST à '-1' lorsque la valeur d'indexation est égale à '0', et à '0' lorsque la valeur d'indexation est différente de '0'. Cette valeur suivante du décalage d'octet OFFST est ensuite stocké dans le troisième registre R3.

Le premier bloc NXTBBW est alors configuré pour déterminer la valeur de décalage d'octet OFFST en un seul cycle dans le processeur de traitement du signal numérique DSP.

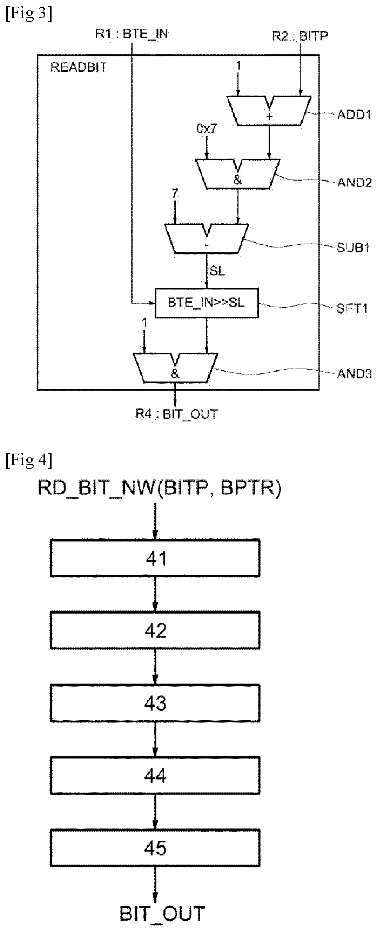

Le circuit dédié HWC comprend un deuxième bloc READBIT configuré pour déterminer la valeur BIT_OUT d'un bit donné dans un octet BTE_IN. Un tel deuxième bloc READBIT est illustré à la figure 3. Le deuxième bloc READBIT est configuré pour recevoir en entrée la valeur BITP du pointeur de position de bit stockée dans le deuxième registre R2 ainsi que l'octet BTE_IN stocké dans le premier registre R1.

Le deuxième bloc READBIT comprend un circuit additionneur ADD1 configuré pour recevoir en entrée la valeur du pointeur de position de bit BITP ainsi qu'une valeur égale à '1'. Le circuit additionneur ADD1 est ainsi configuré pour additionner '1' à la valeur du pointeur de position de bit BITP.

Le deuxième bloc READBIT comprend également une première porte logique AND2 de type « ET » configurée pour recevoir en entrée la valeur du pointeur de position de bit BITP augmentée de '1' et un masque de valeur '0x7' en hexadécimal.

Le deuxième bloc READBIT comprend également un circuit soustracteur SUB1 configuré pour recevoir en entrée une valeur égale à '7' et la valeur générée en sortie de la porte logique AND2. Ce circuit soustracteur SUB1 est configuré pour générer une valeur SL correspondant à la différence entre la valeur '7' et la valeur générée en sortie de la porte logique AND2.

La valeur SL est donc calculé par la formule suivante :SL = 7 - (BITP + 1)&0x7.

Le deuxième bloc READBIT comprend également un registre à décalage SFT1 configuré pour recevoir l'octet BTE_IN stocké dans le premier registre R1 et pour décaler cet octet BTE_IN vers la droite d'un nombre de bits correspondant à la valeur SL.

Le deuxième bloc READBIT comprend également une deuxième porte logique AND3 de type « ET » configurée pour recevoir en entrée une valeur égale à '1' et l'octet décalé généré en sortie du registre à décalage SFT1. Cette porte logique AND3 permet ainsi de générer en sortie la valeur BIT_OUT du bit le plus faible de l'octet décalé. Cette valeur correspond à la valeur du bit de l'octet BTE_IN stocké dans le premier registre situé à la position pointée par le pointeur de position de bit BITP. Cette valeur BIT_OUT du bit de l'octet BTE_IN est ensuite stockée dans le quatrième registre R4.

Ainsi, le deuxième bloc READBIT permet de déterminer la valeur BIT_OUT du bit de l'octet BTE_IN stocké dans le premier registre R1 situé à la position pointée par le pointeur de position de bit BITP. En particulier, le deuxième bloc READBIT est configuré pour déterminer la valeur BIT_OUT en un seul cycle du processeur de traitement du signal numérique DSP.

Le troisième bloc WRITEBIT est configuré pour écrire un bit BIT_IN à une position BITP dans un octet BTE_IN stocké dans le premier registre R1. Un tel troisième bloc WRITEBIT est illustré à la figure 5.

Le troisième bloc WRITEBIT est configuré pour recevoir en entrée la valeur du bit BIT_IN stocké dans le quatrième registre R4, la valeur BITP du pointeur de position de bit stockée dans le deuxième registre R2 ainsi que l'octet BTE_IN stocké dans le premier registre R1.

Le troisième bloc WRITEBIT comprend un circuit additionneur ADD1 configuré pour recevoir en entrée la valeur du pointeur de position de bit BITP ainsi qu'une valeur égale à '1'. Le circuit additionneur ADD1 est ainsi configuré pour additionner '1' à la valeur du pointeur de position de bit BITP.

Le troisième bloc WRITEBIT comprend également une première porte logique AND2 de type « ET » configurée pour recevoir en entrée la valeur du pointeur de position de bit BITP augmentée de '1' et un masque de valeur '0x7' en hexadécimal.

Le troisième bloc WRITEBIT comprend également un circuit soustracteur SUB1 configuré pour recevoir en entrée une valeur égale à '7' et la valeur générée en sortie de la porte logique AND2. Ce circuit soustracteur SUB1 est configuré pour générer une valeur SL correspondant à la différence entre la valeur '7' et la valeur générée en sortie de la porte logique AND2.

La valeur SL est donc calculé par la formule suivante :SL = 7 - (BITP + 1)&0x7.

Le troisième bloc WRITEBIT comprend également un registre à décalage SFT2 configuré pour calculer un masque MSK. Ce masque MSK sert à insérer le bit d'entrée BIT_IN dans l'octet BTE_IN. En particulier, le registre à décalage SFT2 est configuré pour décaler la valeur 1 vers la gauche d'un nombre de bits correspondant à la valeur SL pour obtenir le masque MSK.

Le troisième bloc WRITEBIT comprend en outre une porte inverseuse NOT1 configurée pour inverser le masque MSK de manière à obtenir un masque complémentaire INVMSK.

Le troisième bloc WRITEBIT comprend également une deuxième porte logique AND4 de type « ET » configurée pour appliquer le masque complémentaire INVMSK sur l'octet BTE_IN. Cette porte logique AND4 permet ainsi de générer en sortie un premier octet B0.

Le troisième bloc WRITEBIT comprend également une porte logique OR1 de type « OU » configuré pour effectuer une opération logique de type « OU » entre le masque MSK et l'octet BTE_IN. Cette porte logique OR1 permet ainsi de générer en sortie un deuxième octet B1.

Le troisième bloc WRITEBIT comprend aussi un circuit de sélection MUX1 configuré pour recevoir les octets B0 et B1 et pour générer un octet BTE_OUT correspondant à l'octet B0 ou à l'octet B1 selon la valeur du bit BIT_IN. En particulier, si la valeur du bit BIT_IN est égale à 0 alors l'octet BTE_OUT correspond à l'octet B0. Sinon, l'octet BTE_OUT correspond à l'octet B1. Le circuit de sélection MUX1 peut notamment être un multiplexeur.

L'octet BTE_OUT obtenu en sortie du circuit de sélection MUX1 correspond à l'octet BTE_IN dans lequel le bit pointé par le pointeur de position de bit BITP a été modifié par la valeur du bit BIT_IN.

Ainsi, le troisième bloc WRITEBIT permet d'écrire la valeur du bit BIT_IN dans l'octet BTE_IN à la position pointée par le pointeur de position de bit BITP. En particulier, le troisième bloc WRITEBIT est configuré pour écrire ledit bit dans l'octet BTE_IN en un seul cycle du processeur de traitement du signal numérique DSP. L'octet résultant BTE_OUT avec ledit bit écrit est stocké dans le registre R1 à la sortie.

Le troisième bloc WRITEBIT peut partager les circuits ADD1, AND2 et SUB1 avec le deuxième bloc READBIT. En variante, les circuits ADD1, AND2 et SUB1 du deuxième bloc READBIT et du troisième bloc WRITEBIT peuvent être distincts.

Comme vu précédemment, le processeur de traitement du signal numérique DSP est configuré pour exécuter un programme d'ordinateur comprenant des instructions qui, lorsque le programme est exécuté, conduisent le processeur de traitement du signal numérique DSP à réaliser un accès en lecture et/ou en écriture à un bit d'un octet du tableau d'octets stocké en mémoire. En particulier, l'exécution desdites instructions conduisent le processeur de traitement du signal numérique DSP à exécuter une fonction RD_BIT_NW ou une fonction WRT_BIT_NW.

La fonction RD_BIT_NW est configurée pour accéder aléatoirement en lecture à un bit dans un tableau d'octets stocké dans la mémoire MEM. Cette fonction RD_BIT_NW est notamment appelée plusieurs fois pour lire l'ensemble des bits du tableau d'octets BTAB.

En particulier, le programme d'ordinateur PRG est configuré pour mettre en œuvre le procédé d'accès en lecture à un bit stocké dans le tableau d'octets BTAB illustré à la figure 4.

Plus particulièrement, le programme d'ordinateur PRG comprend des instructions permettant d'effectuer une étape 40 d'initialisation. Cette étape 40 permet d'initialiser le pointeur de position de bit BITP à la valeur d'une longueur de la séquence de bits du tableau d'octets BTAB minorée d'un. Cette étape 40 permet également d'initialiser le pointeur d'octet à l'adresse du dernier octet dans le tableau d'octets BTAB stocké dans la mémoire MEM.

Ladite fonction RD_BIT_NW peut ensuite être appelée plusieurs fois pour lire les différents bits du tableau d'octets BTAB. L'appel de la fonction RD_BIT_NW permet d'effectuer les étapes 41, 42, 43, 44 et 45 décrites dans la suite. À chaque appel de la fonction RD_BIT_NW, ces étapes 41, 42, 43, 44 et 45 sont donc exécutées.

En particulier, ladite fonction RD_BIT_NW est configurée pour précalculer une valeur suivante d'un décalage d'octet. Pour ce faire, à l'étape 41, la fonction RD_BIT_NW utilise l'instruction NXTBBW mise en œuvre par le premier bloc NXTBBW dudit circuit dédié. Le précalcule de la valeur suivante d'un décalage d'octet permet de connaître le prochain octet à utiliser pour le prochain accès en lecture réalisé pour une prochaine mise en œuvre de la fonction RD_BIT_NW. L'instruction NXTBBW permet d'anticiper le calcul de la valeur suivant du décalage d'octet avant d'effectuer la lecture du bit dans l'octet actuel. Cela permet de réduire le temps d'exécution de la fonction RD_BIT_NW en réduisant le nombre de cycles d'exécution du processeur de traitement du signal numérique DSP.

Ladite fonction RD_BIT_NW est ensuite configurée pour décrémenter le pointeur de position de bit, à l'étape 42. Ainsi le pointeur de position de bit décrémenté pointe vers la position du bit suivant dans le tableau d'octets BTAB.

Ladite fonction RD_BIT_NW est ensuite configurée pour lire l'octet courant pointé par le pointeur d'octet dans le tableau d'octets, à l'étape 43.

Ladite fonction RD_BIT_NW est ensuite configurée pour mettre à jour le pointeur d'octet en ajoutant la valeur du décalage d'octet au pointeur d'octet, à l'étape 44.

Ladite fonction RD_BIT_NW est ensuite configurée pour lire puis retourner le bit courant, à l'étape 45. Pour ce faire, la fonction RD_BIT_NW utilise l'instruction READBIT mise en œuvre par le deuxième bloc READBIT dudit circuit dédié.

Dans un processeur de type « multiple issue » ou « multi-thread », c'est-à-dire qui peut exécuter plusieurs instructions en parallèle en tenant compte des dépendances de données entre elles, ces étapes 41, 42, 43, 44 et 45 peuvent s'exécuter soit en séquentiel soit en parallèle.

La fonction RD_BIT_NW utilise seulement le pointeur de position de bit à la place d'un pointeur d'octet et d'un masque pour lire un bit dans un tableau d'octets. La fonction RB_BIT_NW utilise donc seulement une variable au lieu de deux variables. À partir du pointeur de position de bit, en utilisant le premier bloc NXTBBW du circuit dédié, il est possible de déterminer une valeur d'indexation du bit à lire dans l'octet courant de la table d'octets et de calculer la valeur de décalage pour l'octet contenant le bit suivant à lire. Le premier bloc NXTBBW et le deuxième bloc READBIT du circuit dédié HWC sont configurés pour effectuer l'ensemble des calculs et des tests pour extraire le bit à lire d'un octet d'un tableau d'octets. Cela permet d'effectuer la lecture du bit plus rapidement. Par exemple, l'utilisation du circuit dédié permet d'être deux fois plus rapide qu'un accès lecture effectué uniquement par voie logicielle en utilisant un pointeur d'octet et un masque.

Une telle fonction RD_BIT_NW peut être utilisée dans toutes applications requérant d'accéder en lecture aléatoirement à un bit dans un tableau d'octets de la mémoire. En particulier, la fonction RD_BIT_NW peut être utilisé dans n'importe quel codeur-décodeur audio requérant d'accéder en lecture aléatoirement à un bit dans un tableau d'octets de la mémoire. Plus particulièrement, la fonction RD_BIT_NW peut être mise en œuvre dans le codeur-décodeur audio « LC3 » (de l'anglais « Low Complexity Communication Codec »). Par exemple, la fonction RD_BIT_NW peut être mise en œuvre pendant le décodage d'un flux de données audio.

Le programme d'ordinateur peut également comprendre des instructions qui, lorsque le programme est exécuté par le processeur de traitement du signal numérique DSP, conduisent celle-ci à exécuter une fonction WRT_BIT_NW. Cette fonction WRT_BIT_NW permet d'accéder aléatoirement en écriture à un bit dans un tableau d'octets stocké dans la mémoire.

La fonction WRT_BIT_NW est configurée pour accéder aléatoirement en écriture sur un bit dans un tableau d'octets stocké dans la mémoire MEM. Cette fonction WRT_BIT_NW est notamment appelée plusieurs fois pour écrire sur l'ensemble des bits du tableau d'octets BTAB.

En particulier, le programme d'ordinateur PRG est configuré pour mettre en œuvre le procédé d'accès en écriture sur un bit dans le tableau d'octets BTAB illustré à la figure 6.

Plus particulièrement, le programme d'ordinateur PRG comprend des instructions permettant d'effectuer une étape 60 d'initialisation. Cette étape 60 permet d'initialiser le pointeur de position de bit BITP à la valeur d'une longueur de la séquence de bits du tableau d'octets BTAB minorée d'un. Cette étape 60 permet également d'initialiser le pointeur d'octet à l'adresse du dernier octet dans le tableau d'octets BTAB stocké dans la mémoire MEM.

Ladite fonction WRT_BIT_NW peut ensuite être appelée plusieurs fois pour écrire sur les différents bits du tableau d'octets BTAB. L'appel de la fonction WRT _BIT_NW permet d'effectuer les étapes 61, 62, 63, 64 et 65 décrites dans la suite. À chaque appel de la fonction WRT_BIT_NW, ces étapes 61, 62, 63, 64 et 65 sont donc exécutées.

En particulier, ladite fonction WRT_BIT_NW est configurée pour précalculer une valeur suivante d'un décalage d'octet. Pour ce faire, à l'étape 61, la fonction WRT_BIT_NW utilise l'instruction NXTBBW mise en œuvre par le premier bloc NXTBBW dudit circuit dédié. Le précalcule de la valeur suivante d'un décalage d'octet permet de connaître le prochain octet à utiliser pour le prochain accès en écriture réalisé pour une prochaine mise en œuvre de la fonction WRT_BIT_NW. L'instruction NXTBBW permet d'anticiper le calcul de la valeur suivant du décalage d'octet avant d'effectuer l'écriture du bit dans l'octet actuel. Cela permet de réduire le temps d'exécution de la fonction WRT_BIT_NW en réduisant le nombre de cycles d'exécution du processeur de traitement du signal numérique DSP.

Ladite fonction WRT_BIT_NW est ensuite configurée pour décrémenter le pointeur de position de bit, à l'étape 62. Ainsi le pointeur de position de bit décrémenté pointe vers la position du bit suivant dans le tableau d'octets BTAB.

Ladite fonction WRT_BIT_NW est ensuite configurée pour lire l'octet courant pointé par le pointeur d'octet dans le tableau d'octets, à l'étape 63.

Ladite fonction WRT_BIT_NW est ensuite configurée pour mettre à jour le pointeur d'octet en ajoutant la valeur du décalage d'octet au pointeur d'octet, à l'étape 64.

Ladite fonction WRT_BIT_NW est ensuite configurée pour écrire un bit BIT_IN dans le bit courant, à l'étape 65. Pour ce faire, la fonction WRT_BIT_NW utilise l'instruction WRITEBIT mise en œuvre par le troisième bloc WRITEBIT dudit circuit dédié.

Dans un processeur de type « multiple issue » ou « multi-thread », ces étapes 61, 62, 63, 64 et 65 peuvent s'exécuter soit en séquentiel soit en parallèle.

La fonction WRT_BIT_NW utilise seulement le pointeur de position de bit à la place d'un pointeur d'octet et d'un masque pour écrire un bit dans un tableau d'octets. La fonction WRT_BIT_NW utilise donc seulement une variable au lieu de deux variables. À partir du pointeur de position de bit, en utilisant le premier bloc NXTBBW du circuit dédié, il est possible de déterminer une valeur d'indexation du bit sur lequel écrire dans l'octet courant de la table d'octets et de calculer la valeur de décalage pour l'octet contenant le bit suivant sur lequel écrire. Le premier bloc NXTBBW et le troisième bloc WRITEBIT du circuit dédié HWC sont configurés pour effectuer l'ensemble des calculs et des tests pour écrire sur un bit d'un tableau d'octets. Cela permet d'effectuer une écriture d'un bit plus rapidement. Par exemple, l'utilisation du circuit dédié permet d'être deux fois plus rapide qu'un accès en écriture effectué uniquement par voie logicielle en utilisant un pointeur d'octet et un masque.

Une telle fonction WRT_BIT_NW peut être utilisée dans toutes applications requérant d'accéder en écriture aléatoirement à un bit dans un tableau d'octets de la mémoire. En particulier, la fonction WRT_BIT_NW peut être utilisé dans n'importe quel codeur-décodeur audio requérant d'accéder en lecture aléatoirement à un bit dans un tableau d'octets de la mémoire. Plus particulièrement, la fonction WRT_BIT_NW peut être mise en œuvre dans le codeur-décodeur audio « LC3 » (de l'anglais « Low Complexity Communication Codec »).

Par ailleurs, le circuit dédié HWC du système informatique SYS présente l'avantage d'être peu coûteux et occupe peu de place dans le système informatique. L'utilisation d'un tel circuit dédié n'a aucun impact sur la fréquence maximale du processeur de traitement du signal numérique. L'utilisation d'un tel circuit dédié permet également de réduire la consommation d'énergie pour lire un bit dans un tableau d'octets dans la mémoire.

## Revendications

1. Système informatique comprenant :
- une mémoire (MEM) de données configurée pour stocker un tableau d'octets (BTAB), et une mémoire (MEMP) de programme configurée pour stocker un programme d'ordinateur (PRG),
- un processeur de traitement du signal numérique (DSP) configuré pour exécuter un programme d'ordinateur (PRG) comprenant des instructions permettant d'accéder à un bit dans ledit tableau d'octets (BTAB), ledit processeur de traitement du signal numérique (DSP) étant configuré pour accéder à chaque octet dudit tableau d'octets,
- un circuit dédié (HWC) configuré pour accéder en lecture et/ou en écriture à un bit d'un octet dudit tableau d'octets en utilisant :
• un pointeur de position de bit (BITP) pointant vers le bit à accéder dans le tableau d'octets, et
• ledit octet (BTE_IN) comprenant le bit à accéder,
dans lequel le circuit dédié (HWC) comprend :
- un premier bloc (NXTBBW) configuré pour calculer une valeur de décalage d'octet selon la valeur du pointeur de position de bit, et
- un deuxième bloc (READBIT) configuré pour déterminer la valeur d'un bit à lire à partir du pointeur de position de bit (BITP) et d'un octet (BTE_IN) comprenant ledit bit à lire,
et dans lequel le programme d'ordinateur (PRG) comprend des instructions qui lorsqu'elles sont mises en œuvre par le processeur de traitement du signal numérique conduisent celui-ci à effectuer au moins un appel d'une fonction (RD_BIT_NW) pour lire un bit dans le tableau d'octets (BTAB), chaque appel de cette fonction prenant en entrée le pointeur de position de bit et un pointeur d'octet comme attributs et entraînant :
- un calcul d'une valeur de décalage d'octet par ledit premier bloc (OFFST), puis
- une mise à jour du pointeur d'octet par ladite valeur de décalage d'octet, puis
- une détermination de la valeur du bit à lire par ledit deuxième bloc (READBIT) du circuit dédié (HWC).

2. Système selon la revendication 1, dans lequel le premier bloc (NXTBBW) du circuit dédié (HWC) comprend :
- une porte logique (AND1) de type « ET » configurée pour effectuer une opération logique de type « ET » entre la valeur du pointeur de position de bit (BITP) et la valeur hexadécimale 0x7 pour obtenir une valeur d'indexation (INDX),
- un circuit de comparaison (COMPC) configuré pour calculer la valeur de décalage d'octet en comparant la valeur d'indexation (INDX) à 0, la valeur de décalage d'octet étant égale à -1 lorsque la valeur d'indexation est égale à 0 et égale à 0 sinon.

3. Système selon l'une quelconque des revendications 1 ou 2, dans lequel le deuxième bloc (READBIT) du circuit dédié (HWC) comprend :
- un circuit additionneur (ADD1) configuré pour augmenter la valeur du pointeur de position de bit de 1,
- une première porte logique (AND2) de type « ET » configurée pour effectuer une opération logique de type « ET » entre la valeur augmentée du pointeur de position de bit et une valeur hexadécimale égale à 0x7,
- un circuit soustracteur (SUB1) configuré pour calculer une valeur de décalage (SL) en soustrayant une valeur égale à 7 de la valeur en sortie de la première porte logique (AND2) de type « ET »,
- un circuit de décalage (SFT1) configuré pour décaler vers la droite la valeur de l'octet comprenant ledit bit à accéder d'un nombre de bits correspondant à ladite valeur de décalage (SL),
- une deuxième porte logique (AND3) de type « ET » configurée pour effectuer une opération logique de type « ET » entre une valeur égale à 1 et la valeur de l'octet décalée de manière à obtenir la valeur (BIT_OUT) du bit à lire.

4. Système selon l'une des revendications 1 à 3, dans lequel le circuit dédié (HWC) comprend un troisième bloc (WRITEBIT) configuré pour écrire la valeur d'un bit à la place d'un bit pointé par le pointeur de position de bit (BITP) dans un octet (BTE_IN) sur lequel écrire.

5. Système selon la revendication 4, dans lequel le troisième bloc (WRITEBIT) du circuit dédié (HWC) comprend :
- un circuit additionneur (ADD1) configuré pour augmenter la valeur du pointeur de position de bit de 1,
- une première porte logique (AND2) de type « ET » configuré pour effectuer une opération logique de type « ET » entre la valeur augmentée du pointeur de position de bit et une valeur hexadécimale égale à 0x7,
- un circuit soustracteur (SUB1) configuré pour calculer une valeur de décalage (SL) en soustrayant une valeur égale à 7 de la valeur en sortie de la première porte logique (AND2) de type « ET »,
- un circuit de décalage (SFT2) configuré pour décaler vers la gauche la valeur 1 d'un nombre de bits correspondant à ladite valeur de décalage (SL) pour créer un masque (MSK),
- une porte logique inverseuse (NOT1) configuré pour créer un masque complémentaire (INVMSK) à partir dudit masque (MSK) obtenu en sortie du circuit de décalage (SFT2),
- un deuxième circuit logique de type « ET » (AND4) configuré pour appliquer le masque complémentaire (INVMSK) sur l'octet (BTE_IN) sur lequel écrire pour obtenir un premier octet (B0),
- un circuit logique de type « OU » (OR1) configuré pour appliquer le masque (MSK) sur l'octet (BTE_IN) sur lequel écrire pour obtenir un deuxième octet (B1),
- un circuit de sélection (MUX1) configuré pour générer un octet (BTE_OUT) correspondant au premier octet (B0) si la valeur du bit à écrire est égale à 0 ou correspondant au deuxième octet (B1) sinon.

6. Système selon l'une quelconque des revendications 4 ou 5, dans lequel le programme d'ordinateur (PRG) comprend des instructions qui lorsqu'elles sont mises en œuvre par le processeur de traitement du signal numérique conduisent celui-ci à effectuer au moins un appel d'une fonction (WRT_BIT_NW) pour écrire un bit dans le tableau d'octets (BTAB), chaque appel de cette fonction prenant en entrée le pointeur de position de bit et un pointeur d'octet comme attributs et entraînant :
- un calcul d'une valeur de décalage d'octet par ledit premier bloc (OFFST), puis
- une mise à jour du pointeur d'octet par ladite valeur de décalage d'octet, puis
- une écriture du bit à écrire par ledit troisième bloc (WRITEBIT) du circuit dédié (HWC).

7. Système selon l'une des revendications 1 à 6, dans lequel le programme d'ordinateur (PRG) comprend des instructions qui lorsqu'elles sont mises en œuvre par le processeur de traitement du signal numérique (DSP) conduisent celui-ci à initialiser le pointeur de position de bit pour qu'il pointe vers la position du dernier bit du tableau d'octets (BTAB), et à décrémenter ledit pointeur de position de bit (BITP) à chaque accès en lecture et/ou en écriture.

8. Procédé, mis en œuvre par un système informatique (SYS), d'accès en lecture et/ou en écriture à un bit d'un octet stocké dans un tableau d'octets (BTAB) dans une mémoire (MEM) de données dudit système informatique, le procédé comprenant une mise en œuvre d'instructions du programme d'ordinateur (PRG) stocké dans une mémoire (MEMP) de programmes par un processeur de traitement du signal numérique (DSP) du système informatique (SYS) entraînant:
- un accès audit octet stocké dans la mémoire (MEM) de données par le processeur de traitement du signal numérique (DSP),
- une mise en œuvre d'un circuit dédié (HWC) du système informatique (SYS) pour accéder en lecture et/ou en écriture audit bit de l'octet accédé par le processeur de traitement du signal numérique (DSP) en utilisant :
• un pointeur de position de bit (BITP) pointant vers le bit à accéder dans le tableau d'octets, et
• ledit octet (BTE_IN) comprenant le bit à accéder, le procédé comprenant en outre :
- une mise en œuvre d'un premier bloc (NXTBBW) du circuit dédié (HWC) pour calculer une valeur de décalage d'octet (OFFST) selon la valeur du pointeur de position de bit (BITP),
- une mise en œuvre d'un deuxième bloc (READBIT) du circuit dédié (HWC) pour déterminer la valeur d'un bit à lire à partir du pointeur de position de bit (BITP) et d'un octet (BTE_IN) comprenant ledit bit à lire, et dans lequel le procédé comprend en outre une mise en œuvre d'instructions du programme d'ordinateur (PRG) par le processeur de traitement du signal numérique (DSP) entraînant au moins un appel d'une fonction (RD_BIT_NW) pour lire un bit dans le tableau d'octets (BTAB), chaque appel de cette fonction prenant en entrée le pointeur de position de bit et un pointeur d'octet comme attributs et entraînant :
- un calcul d'une valeur de décalage d'octet par ledit premier bloc (OFFST), puis
- une mise à jour du pointeur d'octet par ladite valeur de décalage d'octet, puis
- une détermination de la valeur du bit à lire par ledit deuxième bloc (READBIT) du circuit dédié (HWC)..

9. Procédé selon la revendication 8, dans lequel la mise en œuvre du premier bloc (NXTBBW) du circuit dédié (HWC) entraîne :
- une mise en œuvre d'une porte logique (AND1) de type « ET » du premier bloc (NXTBBW) pour effectuer une opération logique de type « ET » entre la valeur du pointeur de position de bit (BITP) et la valeur hexadécimale 0x7 pour obtenir une valeur d'indexation (INDX),
- une mise en œuvre d'un circuit de comparaison (COMPC) du premier bloc (NXTBBW) pour calculer la valeur de décalage d'octet en comparant la valeur d'indexation (INDX) à 0, la valeur de décalage d'octet étant égale à -1 lorsque la valeur d'indexation est égale à 0 et égale à 0 sinon.

10. Procédé selon l'une des revendications 8 ou 9, dans lequel la mise en œuvre du deuxième bloc (READBIT) du circuit dédié (HWC) entraîne :
- une mise en œuvre d'un circuit additionneur (ADD1) du deuxième bloc (READBIT) pour augmenter la valeur du pointeur de position de bit de 1,
- une mise en œuvre d'une première porte logique (AND2) de type « ET » du deuxième bloc (READBIT) pour effectuer une opération logique de type « ET » entre la valeur augmentée du pointeur de position de bit et une valeur hexadécimale égale à 0x7,
- une mise en œuvre d'un circuit soustracteur (SUB1) du deuxième bloc (READBIT) pour calculer une valeur de décalage (SL) en soustrayant une valeur égale à 7 de la valeur en sortie de la première porte logique (AND2) de type « ET »,
- une mise en œuvre d'un circuit de décalage (SFT1) du deuxième bloc (READBIT) pour décaler vers la droite la valeur de l'octet comprenant ledit bit à accéder d'un nombre de bits correspondant à ladite valeur de décalage (SL),
- une mise en œuvre d'une deuxième porte logique (AND3) de type « ET » du deuxième bloc (READBIT) pour effectuer une opération logique de type « ET » entre une valeur égale à 1 et la valeur de l'octet décalée de manière à obtenir la valeur (BIT_OUT) du bit à lire.

11. Procédé selon l'une des revendications 8 à 10, comprenant en outre une mise en œuvre d'un troisième bloc (WRITEBIT) du circuit dédié (HWC) pour écrire la valeur d'un bit à la place d'un bit pointé par le pointeur de position de bit (BITP) dans un octet (BTE_IN) sur lequel écrire.

12. Procédé selon la revendication 11, dans lequel la mise en œuvre du troisième bloc (WRITEBIT) du circuit dédié (HWC) entraîne :
- une mise en œuvre d'un circuit additionneur (ADD1) du troisième bloc (WRITEBIT) pour augmenter la valeur du pointeur de position de bit de 1,
- une mise en œuvre d'une première porte logique (AND2) de type « ET » du troisième bloc (WRITEBIT) pour effectuer une opération logique de type « ET » entre la valeur augmentée du pointeur de position de bit et une valeur hexadécimale égale à 0x7,
- une mise en œuvre d'un circuit soustracteur (SUB1) du troisième bloc (WRITEBIT) pour calculer une valeur de décalage (SL) en soustrayant une valeur égale à 7 de la valeur en sortie de la première porte logique (AND2) de type « ET »,
- une mise en œuvre d'un circuit de décalage (SFT2) du troisième bloc (WRITEBIT) pour décaler vers la gauche la valeur 1 d'un nombre de bits correspondant à ladite valeur de décalage (SL) pour créer un masque (MSK),
- une mise en œuvre d'une porte logique inverseuse (NOT1) du troisième bloc (WRITEBIT) pour créer un masque complémentaire (INVMSK) à partir dudit masque (MSK) obtenu par la mise en œuvre du circuit de décalage (SFT2),
- une mise en œuvre d'un deuxième circuit logique de type « ET » (AND4) du troisième bloc (WRITEBIT) pour appliquer le masque complémentaire (INVMSK) sur l'octet (BTE_IN) sur lequel écrire pour obtenir un premier octet (B0),
- une mise en œuvre d'un circuit logique de type « OU » (OR1) du troisième bloc (WRITEBIT) pour appliquer le masque (MSK) sur l'octet (BTE_IN) sur lequel écrire pour obtenir un deuxième octet (B1).
- une mise en œuvre d'un circuit de sélection (MUX1) pour générer un octet (BTE_OUT) correspondant au premier octet (B0) si la valeur du bit à écrire est égale à 0 ou correspondant au deuxième octet (B1) sinon.

13. Procédé selon l'une quelconque des revendications 11 ou 12, comprenant une mise en œuvre d'instructions du programme d'ordinateur (PRG) par le processeur de traitement du signal numérique (DSP) entraînant au moins un appel d'une fonction (WRT_BIT_NW) pour écrire un bit dans le tableau d'octets (BTAB), chaque appel de cette fonction prenant en entrée le pointeur de position de bit et un pointeur d'octet comme attributs et entraînant :
- un calcul d'une valeur de décalage d'octet par ledit premier bloc (OFFST), puis
- une mise à jour du pointeur d'octet par ladite valeur de décalage d'octet, puis
- une écriture du bit à écrire par ledit troisième bloc (WRITEBIT) du circuit dédié (HWC).

14. Procédé selon l'une des revendications 8 à 13, comprenant une mise en œuvre d'instructions du programme d'ordinateur (PRG) par le processeur de traitement du signal numérique (DSP) entraînant une initialisation du pointeur de position de bit pour qu'il pointe vers la position du dernier bit du tableau d'octets (BTAB), et une décrémentation dudit pointeur de position de bit (BITP) à chaque accès en lecture et/ou en écriture.

## Patentansprüche

1. Computersystem, umfassend:
- einen Datenspeicher (MEM), der so konfiguriert ist, dass er ein Byte-Array (BTAB) speichert, und einen Programmspeicher (MEMP), der so konfiguriert ist, dass er ein Computerprogramm (PRG) speichert,
- einen digitalen Signalverarbeitungsprozessor (DSP), der so konfiguriert ist, dass er ein Computerprogramm (PRG) ausführt, das Anweisungen umfasst, die das Zugreifen auf ein Bit in dem Byte-Array (BTAB) ermöglichen, wobei der digitale Signalverarbeitungsprozessor (DSP) so konfiguriert ist, dass er auf jedes Byte des Byte-Arrays zugreift,
- eine dedizierte Schaltung (HWC), die so konfiguriert ist, dass sie lesend und/oder schreibend auf ein Bit eines Bytes des Byte-Arrays unter Verwendung von Folgendem zugreift:
• eines Bitpositionszeigers (BITP), der auf das Bit verweist, auf das in dem Byte-Array zugegriffen werden soll, und
• des Bytes (BTE_IN), das das Bit umfasst, auf das zugegriffen werden soll,
wobei die dedizierte Schaltung (HWC) Folgendes umfasst:
- einen ersten Block (NXTBBW), der so konfiguriert ist, dass er einen Byte-Offset-Wert entsprechend dem Wert des Bitpositionszeigers berechnet, und
- einen zweiten Block (READBIT), der so konfiguriert ist, dass er den Wert eines zu lesenden Bits aus dem Bitpositionszeiger (BITP) und eines Bytes (BTE_IN), das das zu lesende Bit umfasst, bestimmt,
und wobei das Computerprogramm (PRG) Anweisungen umfasst, die, wenn sie von dem digitalen Signalverarbeitungsprozessor implementiert werden, diesen dazu veranlassen, mindestens einen Aufruf einer Funktion (RD_BIT_NW) auszuführen, um ein Bit in dem Byte-Array (BTAB) zu lesen, wobei jeder Aufruf dieser Funktion den Bitpositionszeiger und einen Bytezeiger als Attribute entgegennimmt und Folgendes bewirkt:
- Berechnen eines Byte-Offset-Werts durch den ersten Block (OFFST), dann
- Aktualisieren des Bytezeigers um den Byte-Offset-Wert, dann
- Bestimmen des Werts des Bits, das von dem zweiten Block (READBIT) der dedizierten Schaltung (HWC) gelesen werden soll.

2. System nach Anspruch 1, wobei der erste Block (NXTBBW) der dedizierten Schaltung (HWC) Folgendes umfasst:
- ein Logikgatter (AND1) vom Typ "UND", das so konfiguriert ist, dass es eine logische Operation vom Typ "UND" zwischen dem Wert des Bitpositionszeigers (BITP) und dem hexadezimalen Wert 0x7 ausführt, um einen Indexierungswert (INDX) zu erhalten,
- eine Vergleichsschaltung (COMPC), die so konfiguriert ist, dass sie den Byte-Offset-Wert berechnet, indem sie den Indexierungswert (INDX) mit 0 vergleicht, wobei der Byte-Offset-Wert gleich -1 ist, wenn der Indexierungswert gleich 0 ist, und ansonsten gleich 0 ist.

3. System nach einem der Ansprüche 1 oder 2, wobei der zweite Block (READBIT) der dedizierten Schaltung (HWC) Folgendes umfasst:
- eine Additionsschaltung (ADD1), die so konfiguriert ist, dass sie den Wert des Bitpositionszeigers um 1 erhöht,
- ein erstes Logikgatter (AND2) vom Typ "UND", das so konfiguriert ist, dass es eine logische Operation vom Typ "UND" zwischen dem erhöhten Wert des Bitpositionszeigers und einem hexadezimalen Wert gleich 0x7 ausführt,
- eine Subtraktionsschaltung (SUB1), die so konfiguriert ist, dass sie einen Verschiebewert (SL) berechnet, indem sie einen Wert gleich 7 von dem Ausgangswert des ersten Logikgatters (AND2) vom Typ "UND" subtrahiert,
- eine Verschiebungsschaltung (SFT1), die so konfiguriert ist, dass sie den Wert des Bytes, das das zuzugreifende Bit umfasst, um eine dem Verschiebewert (SL) entsprechende Anzahl von Bits nach rechts verschiebt,
- ein zweites Logikgatter (AND3) vom Typ "UND", das so konfiguriert ist, dass es eine logische Operation vom Typ "UND" zwischen einem Wert gleich 1 und dem Wert des verschobenen Bytes ausführt, um den Wert (BIT_OUT) des zu lesenden Bits zu erhalten.

4. System nach einem der Ansprüche 1 bis 3, wobei die dedizierte Schaltung (HWC) einen dritten Block (WRITEBIT) umfasst, der so konfiguriert ist, dass er den Wert eines Bits anstelle eines Bits, auf das der Bitpositionszeiger (BITP) zeigt, in ein zu beschreibendes Byte (BTE_IN) schreibt.

5. System nach Anspruch 4, wobei der dritte Block (WRITEBIT) der dedizierten Schaltung (HWC) Folgendes umfasst:
- eine Additionsschaltung (ADD1), die so konfiguriert ist, dass sie den Wert des Bitpositionszeigers um 1 erhöht,
- ein erstes Logikgatter (AND2) vom Typ "UND", das so konfiguriert ist, dass es eine logische Operation vom Typ "UND" zwischen dem erhöhten Wert des Bitpositionszeigers und einem hexadezimalen Wert gleich 0x7 ausführt,
- eine Subtraktionsschaltung (SUB1), die so konfiguriert ist, dass sie einen Verschiebewert (SL) berechnet, indem sie einen Wert gleich 7 von dem Ausgangswert des ersten Logikgatters (AND2) vom Typ "UND" subtrahiert,
- eine Verschiebungsschaltung (SFT2), die so konfiguriert ist, dass sie den Wert 1 um eine Anzahl von Bits, die dem Verschiebewert (SL) entspricht, nach links verschiebt, um eine Maske (MSK) zu erstellen,
- ein umkehrbares Logikgatter (NOT1), das so konfiguriert ist, dass es aus der an dem Ausgang der Verschiebungsschaltung (SFT2) erhaltenen Maske (MSK) eine ergänzende Maske (INVMSK) erstellt,
- eine zweite Logikschaltung vom Typ "UND" (AND4), die so konfiguriert ist, dass sie die ergänzende Maske (INVMSK) auf das Byte (BTE_IN) anwendet, auf das geschrieben werden soll, um ein erstes Byte (B0) zu erhalten,
- eine Logikschaltung vom Typ "ODER" (OR1), die so konfiguriert ist, dass sie die Maske (MSK) auf das Byte (BTE_IN) anwendet, auf das geschrieben werden soll, um ein zweites Byte (B1) zu erhalten,
- eine Auswahlschaltung (MUX1), die so konfiguriert ist, dass sie ein Byte (BTE_OUT) erzeugt, das dem ersten Byte (B0) entspricht, wenn der Wert des zu schreibenden Bits gleich 0 ist, oder andernfalls dem zweiten Byte (B1) entspricht.

6. System nach einem der Ansprüche 4 oder 5, wobei das Computerprogramm (PRG) Anweisungen umfasst, die, wenn sie von dem digitalen Signalverarbeitungsprozessor implementiert werden, diesen dazu veranlassen, mindestens einen Aufruf einer Funktion (WRT_BIT_NW) auszuführen, um ein Bit in das Byte-Array (BTAB) zu schreiben, wobei jeder Aufruf dieser Funktion den Bitpositionszeiger und einen Bytezeiger als Attribute entgegennimmt und Folgendes bewirkt:
- Berechnen eines Byte-Offset-Werts durch den ersten Block (OFFST), dann
- Aktualisieren des Bytezeigers um den Byte-Offset-Wert, dann
- Schreiben des Bits, das von dem dritten Block (WRITEBIT) der dedizierten Schaltung (HWC) geschrieben werden soll.

7. System nach einem der Ansprüche 1 bis 6, wobei das Computerprogramm (PRG) Anweisungen umfasst, die, wenn sie von dem digitalen Signalverarbeitungsprozessor (DSP) implementiert werden, diesen dazu veranlassen, den Bitpositionszeiger zu initialisieren, damit er auf die Position des letzten Bits des Byte-Arrays (BTAB) zeigt, und den Bitpositionszeiger (BITP) bei jedem Lese- und/oder Schreibzugriff zu dekrementieren.

8. Verfahren, das von einem Computersystem (SYS) implementiert wird, zu dem Lese- und/oder Schreibzugriff auf ein Bit eines Bytes, das in einem Byte-Array (BTAB) in einem Datenspeicher (MEM) des Computersystems gespeichert ist, wobei das Verfahren das Implementieren von Anweisungen des Computerprogramms (PRG), das in einem Programmspeicher (MEMP) gespeichert ist, durch einen digitalen Signalverarbeitungsprozessor (DSP) des Computersystems (SYS) umfasst, was Folgendes bewirkt:
- Zugreifen auf das in dem Datenspeicher (MEM) gespeicherte Byte durch den digitalen Signalverarbeitungsprozessor (DSP),
- Implementieren einer dedizierten Schaltung (HWC) des Computersystems (SYS), um lesend und/oder schreibend auf das Bit des Bytes, auf das der digitale Signalverarbeitungsprozessor (DSP) zugreift, unter Verwendung von Folgendem zuzugreifen:
• eines Bitpositionszeigers (BITP), der auf das Bit verweist, auf das in dem Byte-Array zugegriffen werden soll, und
• des Bytes (BTE_IN), das das zuzugreifende Bit umfasst, wobei das Verfahren ferner Folgendes umfasst:
- Implementieren eines ersten Blocks (NXTBBW) der dedizierten Schaltung (HWC), um einen Byte-Offset-Wert (OFFST) entsprechend dem Wert des Bitpositionszeigers (BITP) zu berechnen,
- Implementieren eines zweiten Blocks (READBIT) der dedizierten Schaltung (HWC), um den Wert eines zu lesenden Bits aus dem Bitpositionszeiger (BITP) und eines Bytes (BTE_IN), das das zu lesende Bit umfasst, zu bestimmen, und wobei das Verfahren ferner das Implementieren von Anweisungen des Computerprogramms (PRG) durch den digitalen Signalverarbeitungsprozessor (DSP) umfasst, was mindestens einen Aufruf einer Funktion (RD_BIT_NW) zum Lesen eines Bits aus dem Byte-Array (BTAB) bewirkt, wobei jeder Aufruf dieser Funktion den Bitpositionszeiger und einen Bytezeiger als Attribute entgegennimmt und Folgendes bewirkt:
- Berechnen eines Byte-Offset-Werts durch den ersten Block (OFFST), dann
- Aktualisieren des Bytezeigers um den Byte-Offset-Wert, dann
- Bestimmen des Werts des Bits, das von dem zweiten Block (READBIT) der dedizierten Schaltung (HWC) gelesen werden soll.

9. Verfahren nach Anspruch 8, wobei das Implementieren des ersten Blocks (NXTBBW) der dedizierten Schaltung (HWC) Folgendes bewirkt:
- Implementieren eines Logikgatters (AND1) vom Typ "UND" des ersten Blocks (NXTBBW), um eine logische Operation vom Typ "UND" zwischen dem Wert des Bitpositionszeigers (BITP) und dem hexadezimalen Wert 0x7 auszuführen, um einen Indexierungswert (INDX) zu erhalten,
- Implementieren einer Vergleichsschaltung (COMPC) des ersten Blocks (NXTBBW), um den Byte-Offset-Wert zu berechnen, indem der Indexierungswert (INDX) mit 0 verglichen wird, wobei der Byte-Offset-Wert gleich -1 ist, wenn der Indexierungswert gleich 0 ist, und ansonsten gleich 0 ist.

10. Verfahren nach einem der Ansprüche 8 oder 9, wobei das Implementieren des zweiten Blocks (READBIT) der dedizierten Schaltung (HWC) Folgendes bewirkt:
- Implementieren einer Additionsschaltung (ADD1) des zweiten Blocks (READBIT), um den Wert des Bitpositionszeigers um 1 zu erhöhen,
- Implementieren eines ersten Logikgatters (AND2) vom Typ "UND" des zweiten Blocks (READBIT), um eine logische Operation vom Typ "UND" zwischen dem erhöhten Wert des Bitpositionszeigers und einem hexadezimalen Wert gleich 0x7 auszuführen,
- Implementieren einer Subtraktionsschaltung (SUB1) des zweiten Blocks (READBIT), um einen Verschiebewert (SL) zu berechnen, indem ein Wert gleich 7 von dem Ausgangswert des ersten Logikgatters (AND2) vom Typ "UND" subtrahiert wird,
- Implementieren einer Verschiebungsschaltung (SFT1) des zweiten Blocks (READBIT), um den Wert des Bytes, das das zuzugreifende Bit umfasst, um eine dem Verschiebewert (SL) entsprechende Anzahl von Bits nach rechts zu verschieben,
- Implementieren eines zweiten Logikgatters (AND3) vom Typ "UND" des zweiten Blocks (READBIT), um eine logische Operation vom Typ "UND" zwischen einem Wert gleich 1 und dem Wert des verschobenen Bytes auszuführen, um den Wert (BIT_OUT) des zu lesenden Bits zu erhalten.

11. Verfahren nach einem der Ansprüche 8 bis 10, ferner umfassend das Implementieren eines dritten Blocks (WRITEBIT) der dedizierten Schaltung (HWC) zum Schreiben des Werts eines Bits anstelle eines Bits, auf das der Bitpositionszeiger (BITP) zeigt, in ein zu schreibendes Byte (BTE_IN).

12. Verfahren nach Anspruch 11, wobei das Implementieren des dritten Blocks (WRITEBIT) der dedizierten Schaltung (HWC) Folgendes bewirkt:
- Implementieren einer Additionsschaltung (ADD1) des dritten Blocks (WRITEBIT), um den Wert des Bitpositionszeigers um 1 zu erhöhen,
- Implementieren eines ersten Logikgatters (AND2) vom Typ "UND" des dritten Blocks (WRITEBIT), um eine logische Operation vom Typ "UND" zwischen dem erhöhten Wert des Bitpositionszeigers und einem hexadezimalen Wert gleich 0x7 auszuführen,
- Implementieren einer Subtraktionsschaltung (SUB1) des dritten Blocks (WRITEBIT), um einen Verschiebewert (SL) zu berechnen, indem ein Wert gleich 7 von dem Ausgangswert des ersten Logikgatters (AND2) vom Typ "UND" subtrahiert wird,
- Implementieren einer Verschiebungsschaltung (SFT2) des dritten Blocks (WRITEBIT), um den Wert 1 um eine dem Verschiebewert (SL) entsprechende Anzahl von Bits nach links zu verschieben, um eine Maske (MSK) zu erstellen,
- Implementieren eines umkehrbaren Logikgatters (NOT1) des dritten Blocks (WRITEBIT), um aus der durch das Implementieren der Verschiebungsschaltung (SFT2) erhaltenen Maske (MSK) eine ergänzende Maske (INVMSK) zu erstellen,
- Implementieren einer zweiten Logikschaltung vom Typ "UND" (AND4) des dritten Blocks (WRITEBIT), um die ergänzende Maske (INVMSK) auf das Byte (BTE_IN) anzuwenden, auf das geschrieben werden soll, um ein erstes Byte (B0) zu erhalten,
- Implementieren einer Logikschaltung vom Typ "ODER" (OR1) des dritten Blocks (WRITEBIT), um die Maske (MSK) auf das Byte (BTE_IN) anzuwenden, auf das geschrieben werden soll, um ein zweites Byte (B1) zu erhalten.
- Implementieren einer Auswahlschaltung (MUX1), um ein Byte (BTE_OUT) zu erzeugen, das dem ersten Byte (B0) entspricht, wenn der Wert des zu schreibenden Bits gleich 0 ist, oder andernfalls dem zweiten Byte (B1) entspricht.

13. Verfahren nach einem der Ansprüche 11 oder 12, umfassend das Implementieren von Anweisungen des Computerprogramms (PRG) durch den digitalen Signalverarbeitungsprozessor (DSP), die mindestens einen Aufruf einer Funktion (WRT_BIT_NW) zum Schreiben eines Bits in das Byte-Array (BTAB) bewirkt, wobei jeder Aufruf dieser Funktion den Bitpositionszeiger und einen Bytezeiger als Attribute entgegennimmt und Folgendes bewirkt:
- Berechnen eines Byte-Offset-Werts durch den ersten Block (OFFST), dann
- Aktualisieren des Bytezeigers um den Byte-Offset-Wert, dann
- Schreiben des Bits, das von dem dritten Block (WRITEBIT) der dedizierten Schaltung (HWC) geschrieben werden soll.

14. Verfahren nach einem der Ansprüche 8 bis 13, umfassend das Implementieren von Anweisungen des Computerprogramms (PRG) durch den digitalen Signalverarbeitungsprozessor (DSP) das Initialisieren des Bitpositionszeigers, damit er auf die Position des letzten Bits des Byte-Arrays (BTAB) zeigt, und das Dekrementieren des Bitpositionszeigers (BITP) bei jedem Lese- und/oder Schreibzugriff bewirkt.

## Claims

1. A computer system comprising:
- a data memory (MEM) configured to store a byte array (BTAB), and a program memory (MEMP) configured to store a computer program (PRG),
- a digital signal processor (DSP) configured to execute a computer program (PRG) comprising instructions allowing accessing a bit in said byte array (BTAB), said digital signal processor (DSP) being configured to access each byte of said byte array,
- a dedicated circuit (HWC) configured to read and/or write access a bit of a byte of said byte array using:
• a bit position pointer (BITP) pointing towards the bit to be accessed in the byte array, and
• said byte (BTE_IN) comprising the bit to be accessed, wherein the dedicated circuit (HWC) comprises:
- a first block (NXTBBW) configured to calculate a byte shift value according to the value of the bit position pointer, and
- a second block (READBIT) configured to determine the value of a bit to be read based on the bit position pointer (BITP) and a byte (BTE_IN) comprising said bit to be read, and wherein the computer program (PRG) comprises instructions which, when they are implemented by the digital signal processor, cause the latter to perform at least one call of a function (RD_BIT_NW) to read a bit in the byte array (BTAB), each call of this function taking as input the bit position pointer and a byte pointer as attributes and resulting in:
- a calculation of a byte shift value by said first block (OFFST), then
- an update of the byte pointer with said byte shift value, then
- a determination of the value of the bit to be read by said second block (READBIT) of the dedicated circuit (HWC).

2. The system according to claim 1, wherein the first block (NXTBBW) of the dedicated circuit (HWC) comprises:
- an "AND" type logic gate (AND1) configured to perform an "AND" type logic operation between the value of the bit position pointer (BITP) and the hexadecimal value 0x7 to obtain an index value (INDX),
- a comparison circuit (COMPC) configured to calculate the byte shift value by comparing the index value (INDX) with 0, the byte shift value being equal to -1 when the index value is equal to 0 and equal to 0 otherwise.

3. The system according to any one of claims 1 or 2, wherein the second block (READBIT) of the dedicated circuit (HWC) comprises:
- an adder circuit (ADD1) configured to increase the value of the bit position pointer by 1,
- an "AND" type first logic gate (AND2) configured to perform an "AND" type logic operation between the increased value of the bit position pointer and a hexadecimal value equal to 0x7,
- a subtractor circuit (SUB1) configured to calculate a shift value (SL) by subtracting a value equal to 7 from the value at the output of the "AND" type first logic gate (AND2),
- a shift circuit (SFT1) configured to shift to the right the value of the byte comprising said bit to be accessed by a number of bits corresponding to said shift value (SL),
- an "AND" type second logic gate (AND3) configured to perform an "AND" type logic operation between a value equal to 1 and the shifted value of the byte so as to obtain the value (BIT_OUT) of the bit to be read.

4. The system according to one of claims 1 to 3, wherein the dedicated circuit (HWC) comprises a third block (WRITEBIT) configured to write the value of a bit instead of a bit pointed to by the bit position pointer (BITP) in a byte (BTE_IN) on which to write.

5. The system according to claim 4, wherein the third block (WRITEBIT) of the dedicated circuit (HWC) comprises:
- an adder circuit (ADD1) configured to increase the value of the bit position pointer by 1,
- an "AND" type first logic gate (AND2) configured to perform an "AND" type logic operation between the increased value of the bit position pointer and a hexadecimal value equal to 0x7,
- a subtractor circuit (SUB1) configured to calculate a shift value (SL) by subtracting a value equal to 7 from the value at the output of the "AND" type first logic gate (AND2),
- a shift circuit (SFT2) configured to shift to the left the value 1 by a number of bits corresponding to said shift value (SL) to create a mask (MSK),
- an inverter logic gate (NOT1) configured to create a complementary mask (INVMSK) based on said mask (MSK) obtained at the output of the shift circuit (SFT2),
- an "AND" type second logic circuit (AND4) configured to apply the complementary mask (INVMSK) on the byte (BTE_IN) on which to write to obtain a first byte (B0),
- an "OR" type logic circuit (OR1) configured to apply the mask (MSK) on the byte (BTE_IN) on which to write to obtain a second byte (B1),
- a selection circuit (MUX1) configured to generate a byte (BTE_OUT) corresponding to the first byte (B0) if the value of the bit to be written is equal to 0 or corresponding to the second byte (B1) otherwise.

6. The system according to any one of claims 4 or 5, wherein the computer program (PRG) comprises instructions which, when they are implemented by the digital signal processor, cause the latter to perform at least one call of a function (WRT_BIT_NW) to write a bit in the byte array (BTAB), each call of this function taking as input the bit position pointer and a byte pointer as attributes and resulting in:
- a calculation of a byte shift value by said first block (OFFST), then
- an update of the byte pointer with said byte shift value, then
- a writing of the bit to be written by said third block (WRITEBIT) of the dedicated circuit (HWC).

7. The system according to one of claims 1 to 6, wherein the computer program (PRG) comprises instructions which, when they are implemented by the digital signal processor (DSP), cause the latter to initiate the bit position pointer so that it points towards the position of the last bit of the byte array (BTAB), and to decrement said bit position pointer (BITP) at each read and/or write access.

8. A method, implemented by a computer system (SYS), for read and/or write accessing a bit of a byte stored in a byte array (BTAB) in a data memory (MEM) of said computer system, the method comprising implementing instructions of the computer program (PRG) stored in a program memory (MEMP) by a digital signal processor (DSP) of the computer system (SYS) resulting in:
- an access to said byte stored in the data memory (MEM) by the digital signal processor (DSP),
- an implementation of a dedicated circuit (HWC) of the computer system (SYS) to read and/or write access said bit of the byte accessed by the digital signal processor (DSP) using:
• a bit position pointer (BITP) pointing towards the bit to be accessed in the byte array, and
• said byte (BTE_IN) comprising the bit to be accessed, the method further comprising:
- implementing a first block (NXTBBW) of the dedicated circuit (HWC) to calculate a byte shift value (OFFST) according to the value of the bit position pointer (BITP),
- implementing a second block (READBIT) of the dedicated circuit (HWC) to determine the value of a bit to be read based on the bit position pointer (BITP) and a byte (BTE_IN) comprising said bit to be read, and wherein the method further comprises implementing instructions of the computer program (PRG) by the digital signal processor (DSP) resulting in at least one call of a function (RD_BIT_NW) to read a bit in the byte array (BTAB), each call of this function taking as input the bit position pointer and a byte pointer as attributes and resulting in:
- a calculation of a byte shift value by said first block (OFFST), then
- an update of the byte pointer with said byte shift value, then
- a determination of the value of the bit to be read by said second block (READBIT) of the dedicated circuit (HWC).

9. The method according to claim 8, wherein the implementation of the first block (NXTBBW) of the dedicated circuit (HWC) results in:
- an implementation of an "AND" type logic gate (AND1) of the first block (NXTBBW) to perform an "AND" type logic operation between the value of the bit position pointer (BITP) and the hexadecimal value 0x7 to obtain an index value (INDX),
- an implementation of a comparison circuit (COMPC) of the first block (NXTBBW) to calculate the byte shift value by comparing the index value (INDX) with 0, the byte shift value being equal to -1 when the index value is equal to 0 and equal to 0 otherwise.

10. The method according to one of claims 8 or 9, wherein the implementation of the second block (READBIT) of the dedicated circuit (HWC) results in:
- an implementation of an adder circuit (ADD1) of the second block (READBIT) to increase the value of the bit position pointer by 1,
- an implementation of an "AND" type first logic gate (AND2) of the second block (READBIT) to perform an "AND" type logic operation between the increased value of the bit position pointer and a hexadecimal value equal to 0x7,
- an implementation of a subtractor circuit (SUB1) of the second block (READBIT) to calculate a shift value (SL) by subtracting a value equal to 7 from the value at the output of the "AND" type first logic gate (AND2),
- an implementation of a shift circuit (SFT1) of the second block (READBIT) to shift to the right the value of the byte comprising said bit to be accessed by a number of bits corresponding to said shift value (SL),
- an implementation of an "AND" type second logic gate (AND3) of the second block (READBIT) to perform an "AND" type logic operation between a value equal to 1 and the shifted value of the byte so as to obtain the value (BIT_OUT) of the bit to be read.

11. The method according to one of claims 8 to 10, further comprising implementing a third block (WRITEBIT) of the dedicated circuit (HWC) to write the value of a bit instead of a bit pointed to by the bit position pointer (BITP) in a byte (BTE_IN) on which to write.

12. The method according to claim 11, wherein the implementation of the third block (WRITEBIT) of the dedicated circuit (HWC) results in:
- an implementation of an adder circuit (ADD1) of the third block (WRITEBIT) to increase the value of the bit position pointer by 1,
- an implementation of an "AND" type first logic gate (AND2) of the third block (WRITEBIT) to perform an "AND" type logic operation between the increased value of the bit position pointer and a hexadecimal value equal to 0x7,
- an implementation of a subtractor circuit (SUB1) of the third block (WRITEBIT) to calculate a shift value (SL) by subtracting a value equal to 7 from the value at the output of the "AND" type first logic gate (AND2),
- an implementation of a shift circuit (SFT2) of the third block (WRITEBIT) to shift to the left the value 1 by a number of bits corresponding to said shift value (SL) to create a mask (MSK),
- an implementation of an inverter logic gate (NOT1) of the third block (WRITEBIT) to create a complementary mask (INVMSK) based on said mask (MSK) obtained by implementation of the shift circuit (SFT2),
- an implementation of an "AND" type second logic circuit (AND4) of the third block (WRITEBIT) to apply the complementary mask (INVMSK) on the byte (BTE_IN) on which to write to obtain a first byte (B0),
- an implementation of an "OR" type logic circuit (OR1) of the third block (WRITEBIT) to apply the mask (MSK) on the byte (BTE_IN) on which to write to obtain a second byte (B1).
- an implementation of a selection circuit (MUX1) to generate a byte (BTE_OUT) corresponding to the first byte (B0) if the value of the bit to be written is equal to 0 or corresponding to the second byte (B1) otherwise.

13. The method according to any one of claims 11 or 12, comprising implementing instructions of the computer program (PRG) by the digital signal processor (DSP) resulting in at least one call of a function (WRT_BIT_NW) to write a bit in the byte array (BTAB), each call of this function taking as input the bit position pointer and a byte pointer as attributes and resulting in:
- a calculation of a byte shift value by said first block (OFFST), then
- an update of the byte pointer with said byte shift value, then
- a writing of the bit to be written by said third block (WRITEBIT) of the dedicated circuit (HWC).

14. The method according to one of claims 8 to 13, comprising implementing instructions of the computer program (PRG) by the digital signal processor (DSP) resulting in an initiation of the bit position pointer so that it points towards the position of the last bit of the byte array (BTAB), and in a decremention of said bit position pointer (BITP) at each read and/or write access.
